# EUROPEAN PATENT APPLICATION

(11) **EP 4 599 685 A1**
(43) Date of publication of application: **13.08.2025**
(21) Application number: 24382125.3
(22) Date of filing: 08.02.2024
(51) Int. Cl.: A23G 3/26, A23G 3/34, A23P 10/30, A23P 20/18

(54) **APPARATUS WITH STIRRING BLADES FOR COATING OR ENCAPSULATING ARTICLES**

(71) Applicant: ROMACO TECPHARM, S.L., 08191 Rubí (ES)
(72) Inventor: CUADRADO FERNANDEZ, Pedro, 08020 BARCELONA (ES); GARCIA I GARCIA, Albert, 08750 MOLINS DE REI (ES); CASTELLÀ TORRELLA, Cristina, 08222 TERRASSA (ES)
(74) Representative: ABG Intellectual Property Law, S.L.

(57) **Abstract**

The present invention relates to an apparatus (100) for coating or encapsulating articles (2), comprising a rotating drum (3) with a side wall (31), the drum (3) being sized to contain and stir a batch of articles (2) to be coated during the rotation of the drum; a dispensing group (6) with at least one nozzle (7) for spraying a coating product on the articles (2) contained in the drum (3); and stirring blades (1) located inside the drum and that rotate with the drum, wherein said blades (1) are linked to the drum able to move with respect to the side wall (31) and the apparatus (100) comprising positioning means (8) for positioning the blades (1) that are configured to bring the blades closer or further away from said side wall (31) and that are manually or automatically adjustable, said adjustment affecting the position adopted by the blades with respect to the side wall (31) and consequently also the path that said blades follow about the axis of rotation of the drum when the drum rotates.

## Description

### Technical field of the invention

The present invention relates to an apparatus for coating or encapsulating articles of the type comprising a rotating drum intended for stirring a batch of articles to be coated with a certain product which is sprayed through at least one nozzle placed inside the drum. The apparatus is of the type provided with blades that rotate together with the drum to stir the articles. These apparatuses are used, for example, for coating granular articles, such as in the form of tablets or pills, common in pharmaceutical and confectionery products.

### Background of the invention

The use of apparatuses for coating or encapsulating is widely spread in the pharmaceutical sector for applying an outer layer of one or several products over granular articles, for example, in the form of tablets or pills.

In essence, these apparatuses comprise a chamber within which a drum is rotated containing a production batch of the articles to be coated. Generally, the devices are equipped with a dispensing group that mounts one or more spray nozzles for spraying the product or products with which said articles are to be coated. This spraying operation is performed while the drum rotates and stirs the batch of articles to ensure a homogeneous coating in all the articles. Also conventionally, the drum may have blades located therein that rotate with the drum, which contribute to stirring the articles within the drum when the drum is rotated. This type of blade is sometimes referred to as deflectors.

The purpose of these apparatuses is the application of a coating of predetermined thickness to a specific batch of articles, the coating generally measured in terms of weight gain, in the most efficient way possible, that is, with minimal operation time and consuming the right amount of energy and coating product.

In order to improve said efficiency, devices are known with adjustable components to adapt to the batch size of the articles to be coated and optimise in this way, for example, the amount of product to be sprayed, the operating time and the energy consumed, all this achieving a quality coating.

Patent document EP3597048 discloses a coating apparatus the dispensing group of which is capable of moving the spraying nozzles to arrange them in the most appropriate position depending on the size of the batch of articles to be coated. Advantageously, a more versatile apparatus is obtained compared to apparatuses where the dispensing group is fixed and from which maximum efficiency can be extracted only for a given batch size of articles. Likewise, it may be the case that for the same batch of articles different distances are required between the free surface of the articles and the spraying nozzles if, for example, the properties of the product with which the articles are to be coated change.

Patent document EP3903922 discloses a suitable solution for apparatuses with a perforated drum and with means for driving a drying air that passes through the chamber and the drum while the coating operation is carried out. The proposed apparatus is prepared to be able to concentrate the air outlet of the chamber in coincidence with the portion of the drum wall where the articles to be coated accumulate. Advantageously, the volume of drying air involved, the speed and quality of drying of the coating of the articles are optimised and a more versatile apparatus is obtained with respect to the apparatus where air circulation is always the same and from which its maximum efficiency can only be extracted for a given article batch size.

A first objective of the present invention is an apparatus that offers new measures to further improve the efficiency of the coating operation.

Of interest is an apparatus wherein the solution to improve coating efficiency is compatible, and/or that can display synergistic effects, with other known techniques such as, by way of example only, those disclosed in patent documents EP3597048 and EP3903922.

Moreover, in apparatuses with drums provided with inner blades, the role played by said blades is known and, specifically, their effectiveness depending on the size or volume of the batch and the articles contained in the drum.

From patent document EP 3219383 a coating apparatus is known the drum of which is equipped with a first and a second set of stirring blades that rotate together with the drum, of which the blades of the second set are detachably coupled with respect to said drum, the device being able to be operated with or without said second set of stirring blades. According to patent document EP 3219383, with this measure the device is more versatile and can operate with small batches in which the degree of filling of the drum amounts to only 10%.

Patent document CN1 13995675 discloses a coating apparatus the drum of which is equipped with a set of stirring blades that rotate together with the drum. The blades are individually attached to a transversal closure wall of the drum capable of rotating about a respective axis that is parallel to the longitudinal axis of the drum. The blades can rotate freely depending on the force that the articles exert on the same when the drum rotates. Each blade has a wall referred to as a contact wall, which is the one that is intended to lift the articles when the drum rotates, which is biased by elastic means that are compressed accumulating energy, so that when the articles stop being on this contact wall, due to the restoration effect of the elastic means, the contact wall catapults the articles that may be deposited on said contact wall.

### Description of the invention

The present invention proposes an apparatus according to claim 1.

The apparatus comprises a drum rotatably mounted about an axis of rotation in an enveloping chamber, the drum comprising a side wall, preferably although optionally perforated, and at least one transversal closing wall for at least partially closing the drum, the drum being sized to contain and stir a batch of articles to be coated during the rotation of the drum; a dispensing group with at least one nozzle for spraying a coating product on the articles contained in the drum; and stirring blades located inside the drum and which rotate with the drum, which help stir the articles inside the drum when the drum is rotated.

In essence, the device is characterised in that said blades are linked to the drum able to move with respect to the side wall of the drum; the apparatus comprising positioning means for positioning the blades that are configured to bring the blades closer or further away from said side wall and that are manually or automatically adjustable, said adjustment affecting the position adopted by the blades with respect to the side wall and consequently also the path that said blades follow about the axis of rotation of the drum when the drum rotates.

Advantageously, as explained in greater detail later, the blades can be arranged further or closer to the side wall of the drum depending on whether the size or volume of the batch to be coated is larger or smaller, respectively.

In a variant embodiment of the invention, the positioning means for positioning the blades are further configured to move the blades closer and away from said side wall when the drum rotates.

In other words, the position of the blades with respect to the side wall of the drum along one revolution of the drum, for a given adjustment of the positioning means, will depend on the angular position of the drum about its axis of rotation. This allows the blades to adopt the optimal position, closer or further away, in that section of the path that interacts with the mass of the articles, generally accumulated on the bottom of the drum slightly displaced towards the direction of rotation of the drum, and a different position in another section of its path.

In one embodiment, on one or on each or of the closing walls of the drum, a respective set of said blades is supported, the floating blades being arranged with respect to the side wall of the drum; and the positioning means comprise, for each set of blades, a guide located outside the drum and in the vicinity of the closing wall that supports the set of blades, and transmission mechanisms each connecting an associated blade inside the drum with a respective guide follower located outside the drum through the closing wall that supports the set of blades.

The curve of the guide, as explained later, will determine how the position of each blade varies along one revolution of the drum; while the position of the guide with respect to the closing wall that supports the set of blades will determine the position that the blade will adopt in that section of interest of its trajectory, which is that section that interacts with the mass of articles contained in the drum.

In a variant embodiment of the invention, the transmission mechanisms comprise a transmission shaft rotatably coupled to the closing wall of the drum about a main axis of rotation, which is parallel to the axis of rotation of the drum, and to which are joined on the outside of the drum, a force arm, which mounts the guide follower, and on the inside of the drum a resistance arm, to which the associated blade is connected.

Advantageously, the arrangement of the blades, and the change of said position along one revolution of the drum, is achieved using only rotating connections, which are easier to seal and to ensure their waterproofing against the environment inside the chamber and inside the drum. The use of mechanisms that implement linear movements using telescopic slides or couplings cause problems or difficulties when it comes to avoiding contamination of the mechanisms or of the internal parts thereof from the environment to which they are exposed.

In a variant embodiment, all or some transmission mechanisms further comprise a translation system based on pulleys and a corresponding pulling member, configured to maintain the orientation of the associated blade with respect to the axis of rotation of the drum.

Advantageously, not only can the blades be moved closer or further away from the side wall of the drum as desired, but the orientation of said blades can also be maintained with respect to an absolute reference or a fixed portion such as the axis of rotation of the drum.

In one embodiment, the translation system comprises a rotating connection between the associated blade and the resistance arm about an auxiliary axis of rotation, parallel to the main axis of rotation of the transmission shaft; a fixed first pulley, that is, solidly attached to the closing wall that supports the blade in question and concentric with the main axis of rotation of the transmission shaft; a second pulley, solidly attached to the associated blade and concentric with the auxiliary axis of rotation; and a pulling member which links with the first and second pulleys.

Advantageously, the waterproofing of the internal parts of the components is still preserved since only rotating connections are still used, which are easier to seal and to ensure their waterproofing compared to other types of connections between portions of a mechanism with relative movement.

In a variant embodiment of the invention, the guide determines a line which is a cam surface; and the transmission mechanisms comprise elastic means biasing the power arm against the cam surface and forcing the guide follower to act as a cam feeler.

In one embodiment, the elastic means comprise a tension spring with a first end connected to a fixed point of the closing wall of the drum and with a second end opposite to the first end connected to the force arm.

Advantageously, the use of guides configured to confine elements that run between the walls of the guide, tending to be dirtier and accumulate waste, is avoided.

As far as the way of moving the guide is concerned, in a variant embodiment of the invention the guide comprises at least one mobile guide sector, which is movably mounted with respect to the axis of rotation of the drum in a plane normal to said axis of rotation or movable with respect to the closing wall that supports the set of blades in a plane parallel to said closing wall; and the positioning means comprise a movement mechanism, to move said mobile guide sector, which can be manually or automatically operated.

The invention is of particular interest for horizontally oriented drums or in any case for drums with a generatrix that is oriented horizontally determining a bottom that, due to the effect of gravity, accumulates the articles to be coated inside the drum.

Consequently, in a variant embodiment of the invention the apparatus is prepared so that the drum is oriented horizontally when the apparatus is conveniently seated on a floor. In this case, it is provided that the movable guide sector is a sector that covers at least 150°, preferably at least 170°, of revolution below the level of the axis of rotation of the drum and that it is movably mounted on a vertical direction, that is, up or down with respect to the drum.

This guarantees that, at least in the portion of the path along which each blade interacts with the articles, which coincides with the lower portion of the drum, the distance between the blades and the side wall of the drum can be regulated.

In one embodiment, the guide comprises a fixed guide sector and the at least one mobile guide sector that complement each other to determine a guide that covers an entire revolution about the axis of rotation of the drum, without interruption, for all the positions that the mobile guide sector may adopt.

Advantageously, if the guide is made of a metallic material, such as stainless steel, the formation in two portions simplifies and especially makes its production cheaper compared to alternatives in which the guide is a single-piece annular guide.

In one embodiment, the fixed guide sector and the mobile guide sector overlap at two points located diametrically opposite with respect to the axis of rotation of the drum and at the level of said axis of rotation.

In an even more specific embodiment, the fixed guide sector covers the upper half of the guide ending in two vertical straight end sections; and the mobile guide sector covers the lower half of the guide, ending in two complementary vertical straight end sections the length of which is sized such that, for all the positions that the mobile guide sector may adopt, each of said complementary vertical straight end sections overlap with, being juxtaposed to, one of the vertical straight end sections of the fixed guide sector.

The invention provides that there is a set of blades on one or both of the transversal closing walls of the drum.

In the second case, it is anticipated that the aforementioned movement mechanism is prepared to move in unison the mobile guide sectors of the guides associated with each set of blades.

The movement mechanism may be a mechanism that is steered from the outside of the drum and may be a motorised mechanism.

The invention provides that the positioning means for positioning the blade, where appropriate, the movement mechanism, are manually or automatically adjustable/actuatable. In the second case, this automation can take into account data obtained from the size or volume of the batch of articles contained in the drum and use for this purpose other resources with which a coating apparatus is usually equipped. It is also envisaged that the apparatus may emit recommendation signals based on data obtained from the size or volume of the batch of articles contained in the drum, all as explained in greater detail later.

As already mentioned, an apparatus according to the invention allows the blades to be arranged with respect to the drum wall at an optimal distance depending on the size or volume of the batch of articles to be coated.

This allows, depending on the size or volume of the aforementioned batch, to select a most appropriate position for the blades. However, the invention also makes it possible to adapt the apparatus to the varying conditions of the articles within the drum during a coating operation. Specifically, and as a non-limiting example, as a coating is applied to the articles, the individual size of the articles and thus the size or volume of the batch increases. Consequently, the invention provides that the positioning means can be adjusted throughout a coating operation of the same batch.

Thus, according to another aspect of the invention, a method is proposed for coating or encapsulating a batch of articles able to be implemented with an apparatus according to the invention which comprises introducing a batch of articles into the drum, rotating the drum to stir the articles introduced therein, spraying a coating product on the articles contained in the drum and removing the batch of coated articles from inside the drum, the method comprising providing the blades with a first path that is repeated along a number n of revolutions of the drum and at least one second path, different from the first path, which is repeated over a number m of revolutions of the drum where the number m of revolutions follows the number n of revolutions.

With the drum or the axis of rotation of the drum horizontally oriented, in the section in which the blades move below the level of the axis of rotation, in the second path the blades are further away from the side wall of the drum compared to the first path.

Throughout this specification, the term "comprises" or variations such as "has" or "with", are understood to imply the inclusion of an element or group of elements mentioned, but not the exclusion of any other element or group of elements.

### Brief description of the drawings

Fig. 1 is a perspective view of a front half of a drum of an apparatus according to the invention, the side wall and the front wall thereof being shown transparent to show components that would otherwise remain concealed;
Figure 2 is a perspective view from the outside of the drum of the apparatus of Figure 1;
Figure 3 is a cross-sectional view of the apparatus, according to a vertical section plane in which the axis of rotation of the drum is inscribed;
Figure 4 is a view of the positioning means and their relationship with the transmission mechanism of a specific blade of a set of blades of the apparatus of Figure 1;
Figures 5a and 5b show a variant embodiment for a guide of an apparatus according to the invention, in particular formed by a fixed guide segment and a mobile guide segment, the mobile guide segment adopting two different vertical positions;
Figure 6 serves to show the change in position of a blade as the vertical position of the guide varies.
Figures 7 and 8 show the inside of a drum of an apparatus according to the invention and serve to illustrate the possibility offered by the apparatus of changing the path followed by the blades of a first set of blades to adapt to the size of the batch of articles to be coated;
Figures 9 and 10 show the inside of a drum of an apparatus according to the invention and serve to illustrate the possibility offered by the apparatus of changing the path followed by the blades of a first set of blades to adapt to variations in the size of articles from the same batch throughout a coating operation.

### Detailed description of the invention

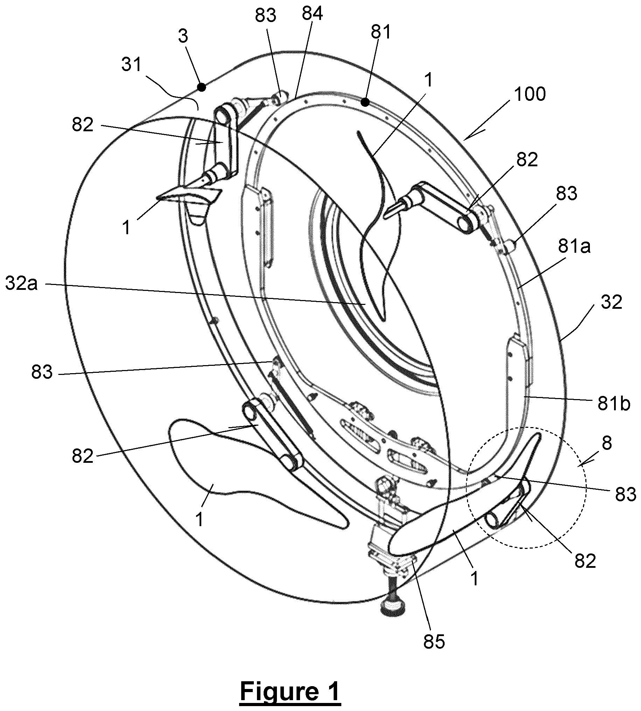

Figures 1 to 3 all relate to the same apparatus 100 that exemplifies the invention.

The apparatus 100 is especially suitable for manufacturing tablets, in particular for coating articles of medicinal material with at least one coating product.

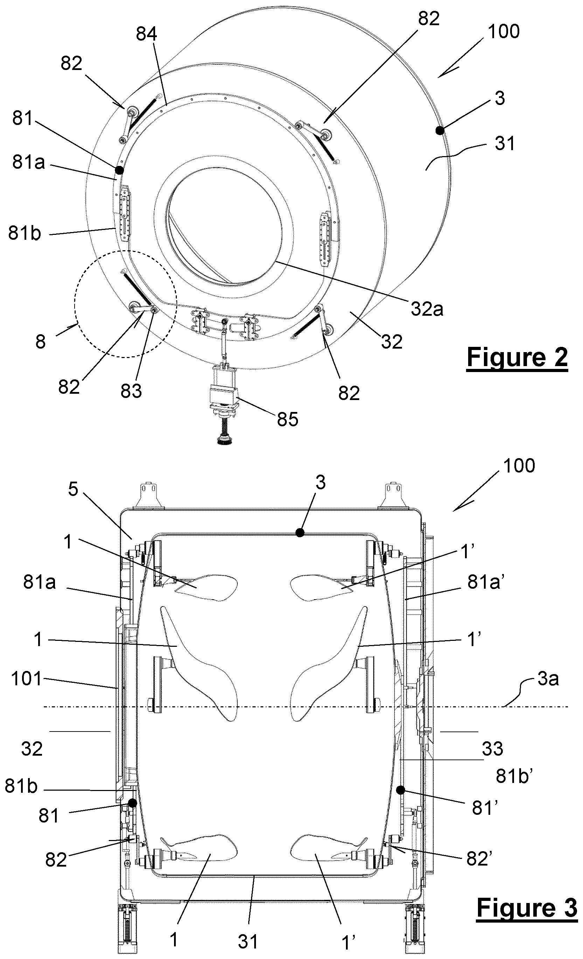

In a manner known per se, the drum 3 is rotatably mounted within an enveloping chamber 5 (see Figure 3) about an axis of rotation 3a.

In the example, the drum 3 is generally cylindrical in shape and the axis of rotation 3a is coincident with the longitudinal axis of the drum 3. The apparatus 100 is designed so that the drum is oriented substantially horizontally when the apparatus is properly seated on a flat floor.

Other shapes are possible, those being of interest in which the drum has a geometric shape of revolution with a generatrix oriented horizontally when the drum 3 is rotated, determining a bottom.

The drum 3 is suitable for containing and stirring a batch of the articles to be coated during the rotation of drum 3.

For this purpose, the drum 3 has, in addition to the side wall 31, at two opposite longitudinal ends, respective transversal closing walls 32, 33 of which one is a front closing wall 32 and the other is a rear closing wall 33. The front closing wall 32 is provided with a central window 32a that communicates with an access gate 101 to the chamber 5 through which the articles can be introduced and removed from the drum 3.

The transversal closure wall or walls are in the example essentially normal, although slightly bulging towards the outside, to the axis of rotation 3a of the drum 3, although other embodiments are possible.

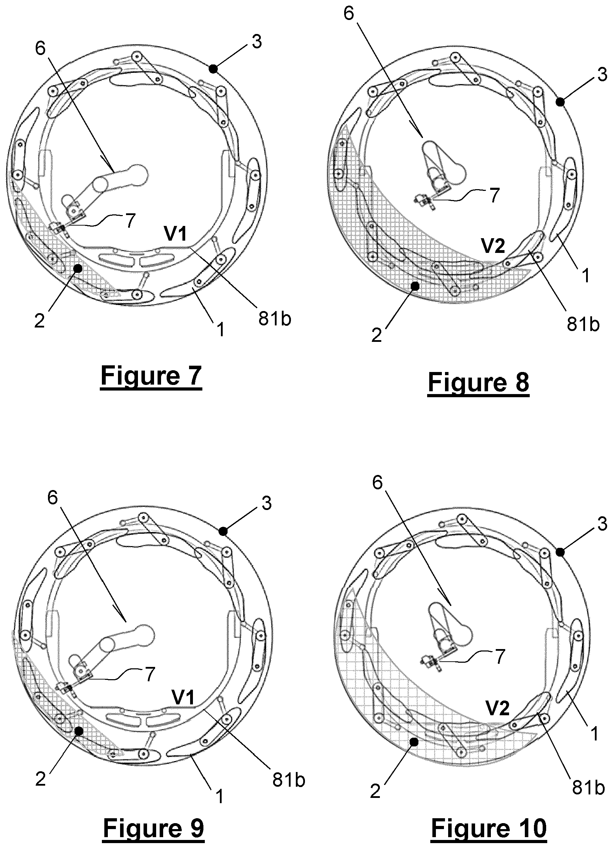

In a manner also known per se, the apparatus 100 is equipped with a dispensing group 6 with at least one nozzle 7 for spraying the coating product(s) 8 onto the articles 2 contained in the drum 3, all as illustrated in figures 7 to 10 which we will refer to below.

In the specific apparatus 100 that exemplifies the invention, the dispensing group 6 is able to adopt different positions to bring the nozzle 7, or nozzles, closer and/or further away from the batch of articles 2 contained within the drum 3, the optimal position being able to be selected according to the size or volume of the batch of said articles.

The dispensing group 6 can be, by way of example only, such as that which is disclosed in patent document EP3597048.

The dispensing group 6 can be manually or automatically controlled.

The position adopted by the nozzle 7, or nozzles, and/or the size or volume of the batch of articles introduced into the drum 3 can be known. For this purpose, sensors, radars, transducers or other elements may be used that are not described in greater detail since they are not essential for the granting of the present invention and which are fully compatible with the technical solution proposed by the invention.

The apparatus 100 that exemplifies the invention can also be equipped, in a manner known per se, with a drying air drive group (not shown) that is projected against the drum 3 so that it passes through the same and that contributes to the drying of the product that is sprayed and with which the articles inside the drum 3 are impregnated. For this purpose, the side wall 31 of the drum 3 would be a perforated wall.

This air drive group can be, by way of example only, such as that which is disclosed in patent document EP3903922.

The apparatus 100 that exemplifies the invention is provided with a series of blades 1, 1' located inside the drum 3 and that rotate together with the drum 3, which serve to better stir the articles inside the drum 3.

In the apparatus 100 that exemplifies the invention there are a first and a second set of such blades. The first set of blades has a number of blades 1 that is four and they are all supported on the front closing wall 32 of the drum 3, being arranged floating with respect to the side wall 31 of the drum 3; and the second set of blades has a number of blades 1' that is four and they are all supported on the rear closing wall 33 of the drum 3, being arranged floating with respect to the side wall 31 of the drum 3.

The invention conceives that there is only one set of blades supported on one of the front or rear closing walls.

The invention also contemplates that the number of blades in a set of blades is different from four.

The invention also conceives that, if there are two sets of blades, the number of blades in each set may be different.

In the specific exemplary apparatus 100, all the blades of the same set of blades are the same, but they could be different.

The drum 3 may be provided with other fixed protuberant elements that interact with the contained articles. A non-limiting example are the fixed helical fins conventionally provided to coating drums to assist in removing the batch of articles from the drum.

Each blade 1, 1' of a set of blades will describe a path along one revolution of the drum 3. It is characteristic of the apparatus 100 according to the invention that said path can be changed and specifically that the distance separating each blade 1, 1' from the side wall 31 of the drum 3 can be changed, especially at least along the lower section of its path, preferably in its lower half and more preferably covering the lower quadrant of the ascent path of the blade, which is where the articles accumulate.

It is also characteristic of the invention that this distance with respect to the drum wall can be changed without changing the orientation of the blade. That is, maintaining the orientation thereof with respect to the axis of rotation 3a of the drum 3.

To do this, the apparatus 100 is equipped with positioning means 8 for positioning the blades 1, 1' of the first and second set of blades, positioning means 8 that are analogous, although symmetrical, for the blades of the first and second set of blades.

The aforementioned positioning means 8 comprise, with reference to Figure 1 and with regard to the blades 1 of the first set supported on the front closing wall 32 of the drum 3, a guide 81, located outside the drum 3, and transmission mechanisms 82 each connecting an associated blade 1 with a respective guide 82 follower 83 located outside the drum 3 through the aforementioned front closing wall 32 of the drum 3.

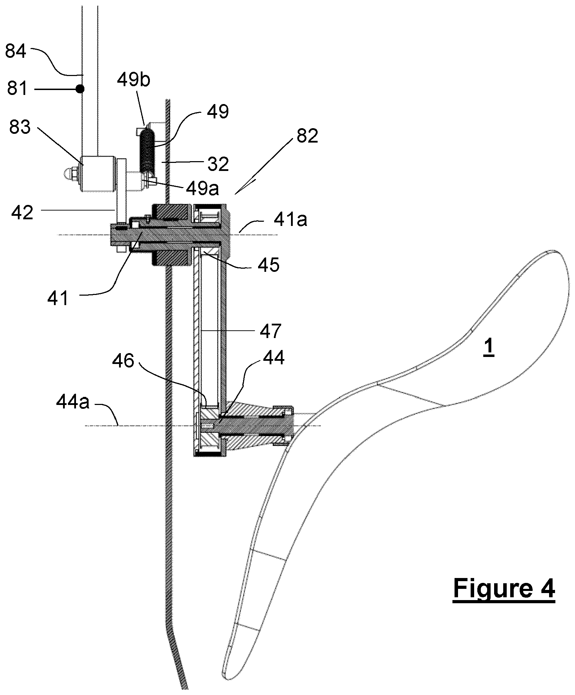

A transmission mechanism 82 for a blade of the first set of blades is illustrated in detail in Figure 4, which we will use together with figures 1 to 3 to explain this mechanism.

Said transmission mechanism 82 comprises a transmission shaft 41 rotatably coupled to the front closing wall 32 of the drum 3, about a main axis of rotation 41a, and to which are joined on the outside of the drum 3, a power arm 42, which mounts the guide follower 83, and on the inside of the drum 3 a resistance arm 43, to which the associated blade 1 is connected. The assembly formed by the transmission shaft 41 and the force and resistance arms 42 and 43 performs the function of a first-class lever, the support of the transmission shaft 41 in the front closing wall 32 of the drum 3 deploying the role of the fulcrum of the lever.

Moreover, the instantaneous position of the guide follower 83 determines the angular position of the force and resistance arms 42 and 43, causing the connection of the blade 1 with the resistance arm 43 to move closer or further away from the side wall 31 of the drum 3.

Moreover, to maintain the orientation of the blade 1 with respect to the longitudinal axis 3a of the drum 3, the transmission mechanism 82 comprises a translation system based on pulleys and a corresponding pulling member.

In the specific example apparatus 100, this translation system comprises a rotating connection 44 between the associated blade 1 and the resistance arm 43 about an auxiliary axis of rotation 44a, parallel to the main axis of rotation 41a of the transmission shaft 41; a fixed first pulley 45 that is solidly attached to the front closing wall 32 of the drum 3, and concentric with the main axis of rotation 41a of the transmission shaft; a second pulley 46, solidly attached to the associated blade 1 and concentric with the auxiliary axis of rotation 44a; and a pulling member 47 which links with the first and second pulleys 45 and 46.

In the specific exemplary apparatus 100, the pulling member 47 is a belt. Other pulling members are possible. Preferably, the pulling member forms a loop, that is, it is closed on itself, engaging with the pulleys, but designs with non-looped pulling members are possible, as long as they are sized to engage a sufficient angle with the pulleys knowing in advance the rotation to which they will be subjected according to the shape of guide 81.

If the pulling member 47 is looped, it is preferable that it has a quick closing or fastening system, or a quick link if it is a chain or similar with links.

In the specific exemplary apparatus 100, the rotation ratio of the first and second pulleys 45, 46 is 1:1, although other solutions are possible.

In the specific exemplary apparatus 100, each transmission mechanism is the same, but there could be different transmission mechanisms, specifically, there could be transmission mechanisms with different resistance arm lengths so that the blades of the same set of blades could comprise blades that follow different paths, although all linked to the same guide 81.

As far as the guide 81 is concerned, it determines a line that is a cam surface 84 and the transmission mechanism 82 comprises elastic means 49 biasing the power arm 42 against the cam surface 84 and forcing the guide follower 83 to act as a cam feeler.

In the specific exemplary apparatus 100, the elastic means 49 comprise a tension spring with a first end 49a connected to a fixed point of the front closing wall 32 of the drum 3 and with a second end 49b opposite to the first end 49a connected to the power arm 42.

Other configurations are possible for biasing the power arm 42 against the cam surface 84 of the guide 81.

Although the invention also conceives other embodiments, including those in which the guide 81 is configured to force the guide follower 83 to follow a certain path in its movement, also acting as a stop in the radial outward direction, the solution that uses the line of the guide 81 as a cam surface 84 and that biases the power arm 42 against said surface is preferable because it leaves the follower 83 free to be able to move in the opposite direction to the line, i.e., in a radial outward direction, even ceasing to support the follower 83 against said cam surface 84. This circumstance can occur when the associated blade 1, 1', for some reason, encounters an obstacle in its path. The exemplary embodiment offers the blade the possibility of yielding, moving towards the axis of rotation 3a of the drum 3, that is, moving away from the side wall 31 of the drum 3, avoiding the obstacle that would otherwise have been impossible if the guide 81 forces the follower 83 to follow a certain path in its movement.

In the specific exemplary apparatus 100, the guide 81 follower 83 comprises a wheel, which rests against the line that determines the cam surface 84 of the guide 81. The wheels may be replaceable wheels.

Although other solutions are possible, the use of a wheel, or equivalent, contributes to reducing the wear of parts with relative movement while smoothing the operation of the device 100.

In order to be able to change the fulcrum of the guide 81 follower 83, and thereby change the path that is imparted on a blade when the drum 3 rotates, the invention proposes in a preferred variant embodiment that the guides 81, 81' each comprise at least one mobile guide sector 81b, 81b', movably mounted with respect to the closing wall that supports the associated set of blades. In the exemplary apparatus 100, a mobile guide sector 81b of the guide 81 is movably mounted with respect to the axis of rotation 3a of the drum 3 and in a plane normal to said axis; and a mobile guide sector 81b' of the guide 81' is movably mounted with respect to the axis of rotation 3a of the drum 3 and in a plane normal to said axis. The positioning means 8 also comprise a movement mechanism 85 to move in unison the aforementioned mobile guide sectors 81b and 81b', manually or automatically operable, as will be explained below.

In the exemplary apparatus 100, with the drum 3 horizontally oriented, the mobile guide sectors 81b and 81b' are mobile in a vertical plane, that is, they can move up or down.

In the exemplary apparatus 100, with the drum 3 horizontally oriented, the articles, due to the effect of gravity although subject to the rotating inertia of the drum 3, will accumulate on the lower portion of the drum or mostly (depending on the size or volume of the batch) on its lower half. Consequently, it is of interest to be able to change the position of the blades 1, 1' in the section of its path that interacts most with the articles, which will correspond to the lower section of its path.

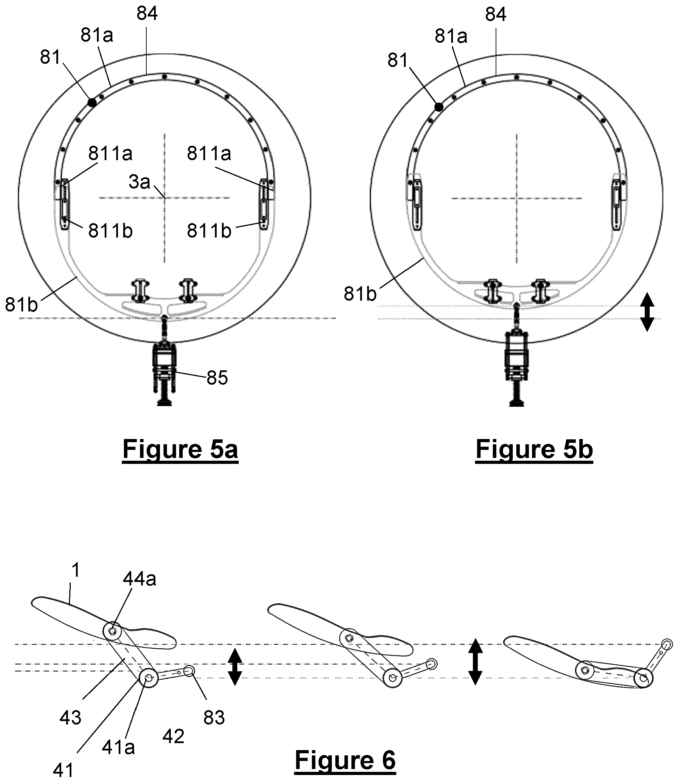

Figure 6 serves to show the effect produced on a blade 1 by the change in the vertical position of the guide on which its follower 83 rests, specifically with the blade 1 being at the lowest part of its path. The higher the guide is, the position of which is transmitted to the guide follower 83, the lower the blade 1 will be, i.e., the closer the blade 1 will be to the side wall of the drum or, in other words, the further away the blade 1 from the axis of rotation of the drum.

By moving the entire guide vertically, the desired path change effect can be produced.

The invention selects, however, and according to a preferred embodiment, that each set of blades combines a fixed guide sector 81a, 81a' with a mobile guide sector 81b, 81b'.

In the exemplary apparatus 100, the guides 81 and 81', associated with the first and second set of blades 1 and 1', respectively, extend one complete revolution about the axis of rotation 3a of the drum 3.

The mobile guide sectors 81b, 81b' are sectors that cover the lower half of the revolution of the respective guides 81, 81'; and the fixed guide sectors 81a, 81a' are complementary sectors, which cover the upper half of the revolution of the respective guides 81, 81'.

Each pair of fixed and mobile guide sectors complement each other to determine together a respective guide which, as previously explained, covers an entire revolution in this case about the axis of rotation 3a of the drum 3 without interruption for all vertical positions that the mobile guide sector may adopt.

In the exemplary apparatus 100, the fixed guide sector 81a and the mobile guide sector 81b overlap at two points located diametrically opposite with respect to the axis of rotation 3a of the drum 3 and at the level of said axis of rotation. Similarly, the fixed guide sector 81a' and the mobile guide sector 81b' overlap at two points located diametrically opposite with respect to the axis of rotation 3a of the drum 3 and at the level of said axis of rotation.

Figures 5a and 5b show the relationship between the fixed and mobile guide sectors for the case of guide 81. This relationship may be the same for the fixed and mobile guide sectors 81a' and 81b' of the guide 81'.

Specifically, the fixed guide sector 81a and the movable guide sector 81b are located in parallel vertical planes. The fixed guide sector 81a covers the upper half of the guide 81 ending in two vertical straight end sections 811a; and the mobile guide sector 81b covers the lower half of the guide 81 ending in two complementary vertical straight end sections 811b the length of which is sized such that, for all the positions that the mobile guide sector 81b may adopt, said complementary vertical straight end sections 811b overlap with, being juxtaposed to, the vertical straight end sections 811a of the fixed guide sector 81a, thus complementing each other to determine the guide 81 that covers an entire revolution around the longitudinal axis of the drum.

Along the juxtaposed straight sections of the two fixed and mobile guide sectors 81a and 81b, the follower 83 of the guide 81 will simultaneously rest on the two guide sectors. Thus, the transition between the fixed and moving guide sectors 81a and 81b is smooth.

The invention can however be implemented in other ways including ways in which the guide 81 does not cover 360°, an entire revolution, around the axis of rotation of the drum.

It is foreseen, for example, that a mobile guide covers only that section of the path of the blades that is intended to be modified, consequently adapting the transmission mechanism associated with each blade so that, in the absence of a guide on which the follower rests, said follower, or failing that the force arm, adopts a position that allows said follower to rest again against the guide when the path of the blade coincides with the section provided with the guide. By way of example only, the transmission mechanism may be provided with stop means that limit the rotation of the power arm in a counterclockwise direction (with reference to Figure 6) and the beginning of the guide may have a transition section that receives the follower and that gradually causes the rotation of the power arm to the operational positions.

A simple mechanical solution that can incorporate the movement mechanism 85 of the positioning means 8 but that provides the accuracy required to move the mobile guide sectors, which in the example are the mobile guide sectors 81b, 81b', as well as being robust, is one that consists of a spindle driven in rotation and threadedly coupled to a component prevented from rotating and solidly attached to the mobile guide sectors 81b, 81b'.

The spindle can be manually operated, with the operator being able to select a vertical position of the mobile guide sectors according to a recipe, based on a table of experiences.

It is, however, of greater interest that the movement mechanism 85 can be automatically operated, depending on the size or volume of the batch of articles contained in the drum 3.

In all, an apparatus according to the invention is more versatile than an apparatus with fixed blades, fixed blades being understood as not being able to change their position with respect to the side wall of the drum and/or not being able to change their path about the axis of rotation of the drum.

The exemplary apparatus 100 may, among other possible variants, be operated in the following ways which are of particular interest and which are explained with reference to figures 7 to 10. Said figures show the path followed by the same blade 1 along one revolution of the drum 3 about its axis of rotation, the drum rotating clockwise.
- With the purpose of operating on a small batch of articles 2, a situation represented in figure 7, a vertical position V1 of the mobile guide sector 81b is selected such that along the lower half of its path the blade 1 is located in the vicinity of the side wall 31 of the drum 3.
- With the purpose of operating on a greater batch of articles 2, a situation represented in figure 8, a vertical position V2 of the same mobile guide sector 81b is selected, wherein V2 is below V1 or, in other words, the mobile guide sector 81a has been moved downwards with respect to the position adopted by the same in figure 7, such that along the lower half of its path the blade 1 is located further away from the side wall 31 of the drum 3.
- In order to operate on the same batch of articles 2, adapting to the changing properties that said articles have as the amount of coating deposited on them is accumulated, it is decided to vary the vertical position of the mobile guide sector 81b over time, following a predetermined guideline or pattern, which is illustrated in the drawings starting from the vertical situation V1 shown in figure 9 and ending in the vertical position V2 shown in figure 10, in order to separate the blade 1 from the side wall 31 of the drum 3 in the lower portion of its path as the size of the articles 2 increases and, naturally, also the volume of the batch of articles.

Figures 7 and 8 show how the path of the blade 1 is selected such that in each case it seeks to move the middle layer of the batch of articles 2 contained in the drum 3.

As mentioned before, the position of the mobile guide sector 81b can be commanded with the positioning means 8, specifically with the movement mechanism 85, to move the said mobile guide sector, in this case, by operating the spindle in rotation, said drive being able to be motorised. In the same way and as has also been advanced before, the movement mechanism 85 to move the aforementioned mobile guide sector 81b can be manually or automatically operated. For the second case, means can be used for measuring the distance from the free surface of the batch of articles to a fixed element, such as the support column of the dispensing group, or to a mobile element, such as a spray nozzle, using sensors, radars, transducers or other measuring elements that allow obtaining data related to the size or volume of the batch of articles contained in the drum. Likewise, intermediate solutions are also foreseen in which the values obtained by said measuring means can be shown to the operator on a control screen and offer recommendations for the positioning of the mobile guide sectors associated with the first and second set of blades.

## Claims

1. An apparatus (100) for coating or encapsulating articles (2), comprising
- a drum (3) rotatably mounted about an axis of rotation (3a) in an enveloping chamber (5), the drum comprising a side wall (31), which may be perforated, and at least one transversal closing wall (32, 33), for at least partially closing the drum (3), the drum (3) being sized to contain and stir a batch of articles (2) to be coated during the rotation of the drum;
- a dispensing group (6) with at least one nozzle (7) for spraying a coating product on the articles (2) contained in the drum (3); and
- stirring blades (1) located inside the drum and that rotate with the drum, which contribute to stirring the articles inside the drum when the drum is rotated, the apparatus (100) being **characterised in that** said blades (1) are linked to the drum able to move with respect to the side wall (31) of the drum; the apparatus (100) comprising positioning means (8) for positioning the blades (1) that are configured to bring the blades closer or further away from said side wall (31) and that are manually or automatically adjustable, said adjustment affecting the position adopted by the blades with respect to the side wall (31) and consequently also the path that said blades follow about the axis of rotation of the drum when the drum rotates.

2. The apparatus (100) according to claim 1, **characterised in that** the positioning means (8) for positioning the blades (1) are configured to move the blades closer and further away from said side wall (31) when the drum rotates.

3. The apparatus (100) according to claim 2, **characterised in that** a respective set of said blades (1, 1') is supported on one or each closing wall (32, 33) of the drum (3), the blades being arranged floating with respect to the side wall (31) of the drum; and **in that** the positioning means (8) comprise, for each set of blades, a guide (81, 81') located outside the drum (3) and in the vicinity of the closing wall (32, 33) that supports the set of blades, and transmission mechanisms (82, 82') each connecting through the closing wall (32, 33) that supports the set of blades an associated blade (1, 1') inside the drum with a respective guide (81, 81') follower (83, 83') located outside the drum (3).

4. The apparatus (100) according to claim 3, **characterised in that** the transmission mechanisms (82, 82') comprise a transmission shaft (41) rotatably coupled to the closing wall (32, 33) of the drum (3) about a main axis of rotation (41a), which is parallel to the axis of rotation (3a) of the drum (3), and to which are joined on the outside of the drum a power arm (42), which mounts the guide (81, 81') follower (83, 83'), and on the inside of the drum (3) a resistance arm (43), to which the associated blade (1, 1') is connected.

5. The apparatus (100) according to claim 4, **characterised in that** all or a number of transmission mechanisms (82, 82') comprise a translation system based on pulleys and a corresponding pulling member, configured to maintain the orientation of the associated blade (1, 1') with respect to the axis of rotation (3a) of the drum (3).

6. The apparatus (100) according to claim 5, **characterised in that** the translation system comprises
- a rotating connection (44) between the associated blade (1) and the resistance arm (43) about an auxiliary axis of rotation (44a), parallel to the main axis of rotation (41a) of the transmission shaft (41);
- a fixed first pulley (45), solidly attached to the closing wall (32) of the drum (3) that supports the blade (1) and concentric with the main axis of rotation (41a) of the transmission shaft;
- a second pulley (46), solidly attached to the associated blade (1) and concentric with the auxiliary axis of rotation (44a); and
- a pulling member (47) which links with the first and second pulleys (45, 46).

7. The apparatus (100) according to any one of claims 4 to 6, **characterised in that** the guide (81) determines a line that is a cam surface (84); and **in that** the transmission mechanisms (82) comprise elastic means (49) biasing the power arm (42) against the cam surface (84) and forcing the guide (81) follower (83) to act as a cam feeler.

8. The apparatus (100) according to claim 7, **characterised in that** the elastic means (49) comprise a tension spring with a first end (49a) connected to a fixed point of the closing wall (32) of the drum (3) and with a second end (49b) opposite to the first end (49a) connected to the power arm (43).

9. The apparatus (100) according to any one of claims 3 to 8, **characterised in that**
- the guide (81) comprises at least one mobile guide sector (81b), which is movably mounted with respect to the axis of rotation (3a) of the drum (3) in a plane normal to said axis of rotation (3a) or with respect to the closing wall (32) that supports the set of blades (1) in a plane parallel to said closing wall; and **in that** the positioning means (8) comprise a movement mechanism (85), to move the said mobile guide sector (81b), which can be manually or automatically operated.

10. The apparatus (100) according to claim 9, **characterised in that** it is prepared so that the drum (3) or the axis of rotation (3a) of the drum (3) is horizontally oriented when the apparatus is conveniently seated on a floor, and **in that** the mobile guide sector (81b) is a sector that covers at least 150° of revolution below the level of the axis of rotation (3a) of the drum, preferably at least 170° below the level of the axis of rotation (3a) of the drum, and it is movably mounted in a vertical direction, i.e., up or down with respect to the drum (3).

11. The apparatus (100) according to any one of claims 9 or 10, **characterised in that** the guide (81) comprises a fixed guide sector (81a) and the at least one mobile guide sector (81b), which complement each other to determine a guide that covers an entire revolution around the axis of rotation (3a) of the drum (3) without interruption for all the positions that the mobile guide sector (81b) may adopt.

12. The apparatus (100) according to claim 11, **characterised in that** the fixed guide sector (81a) and the mobile guide sector (81b) overlap at two points located diametrically opposite with respect to the axis of rotation (3a) of the drum (3) and at the level of the aforementioned axis of rotation.

13. The apparatus (100) according to claim 12, **characterised in that** the fixed guide sector (81a) covers the upper half of the guide (81) ending in two vertical straight end sections (811a); and **in that** the mobile guide sector (81b) covers the lower half of the guide (81) ending in two complementary vertical straight end sections (811b) the length of which is sized such that, for all the positions that the mobile guide sector may adopt (81b) each of said complementary vertical straight end sections (811b) overlap with, being juxtaposed to, one of the vertical straight end sections (811a) of the fixed guide sector (81a).

14. The apparatus (100) according to any one of claims 9 to 13, **characterised in that** a respective set of blades (1, 1') is supported on both closing walls (32, 33) of the drum (3) and **in that** the movement mechanism (85) is prepared to move in unison the mobile guide sectors (81b) of the guides (81, 81') associated with each set of blades.

15. The apparatus (100) according to any one of the preceding claims, **characterised in that** the positioning means (8) for positioning the blades (1) are automatically adjustable, depending on the size or volume of the batch of articles contained in the drum.

16. A method for coating or encapsulating a batch of articles (2) able to be implemented with an apparatus (100) according to any one of the preceding claims which comprises introducing a batch of articles into the drum (3), rotating the drum to stir the articles introduced therein, spraying a coating product (8) on the articles contained in the drum and removing the batch of coated articles from inside the drum (3), the method comprising providing the blades with a first path that is repeated along a number *n* of revolutions of the drum and at least one second path, different from the first path, which is repeated over a number m of revolutions of the drum where the number of m of revolutions follows the number *n* of revolutions.

17. The method according to claim 16, **characterised in that** the drum or the axis of rotation (3a) of the drum (3) being horizontally oriented, in the section in which the blades move below the level of the axis of rotation, in the second path the blades are further away from the side wall (31) of the drum compared to the first path.

18. The method according to claims 16 or 17, **characterised in that** each blade changes its position with respect to the side wall (31) of the drum (3) along each revolution of the drum (3).
